(19) Europäisches Patentamt

European Patent Office

Office européen des brevets

(11) Veröffentlichungsnummer: **0 334 044 B1**

(12) **EUROPÄISCHE PATENTSCHRIFT**

(45) Veröffentlichungstag der Patentschrift: **27.04.94**

(51) Int. Cl.5: **B26D 5/00**, B26D 7/24

(21) Anmeldenummer: **89103132.0**

(22) Anmeldetag: **23.02.89**

(54) **Einrichtung zur Kollisionsverhinderung zweier Schneidwerkzeuge.**

(30) Priorität: **22.03.88 DE 3809630**

(43) Veröffentlichungstag der Anmeldung:
**27.09.89 Patentblatt 89/39**

(45) Bekanntmachung des Hinweises auf die
Patenterteilung:
**27.04.94 Patentblatt 94/17**

(84) Benannte Vertragsstaaten:
**CH DE ES FR GB IT LI**

(56) Entgegenhaltungen:
DE-A- 2 740 793
DE-A- 3 627 658
DE-C- 3 527 063

(73) Patentinhaber: **DÜRKOPP SYSTEMTECHNIK GMBH**
**Postfach 10 02 11**
**D-33502 Bielefeld(DE)**

(72) Erfinder: **Bruder, Wolfgang**
**Heidsiekstrasse 16**
**D-48 Bielefeld 1(DE)**
Erfinder: **Biervert, Klaus**
**Odenwalder Strasse 9**
**D-4905 Spenge 1(DE)**
Erfinder: **Küpper, Gerd**
**Schuckenbäumer Strasse 16**
**D-4902 Bad Salzuflen(DE)**

(74) Vertreter: **Rehmann, Klaus-Thorsten, Dipl.-Ing. et al**
**c/o GRAMM + LINS,**
**Patentanwälte,**
**Theodor-Heuss-Strasse 1**
**D-38122 Braunschweig (DE)**

## Beschreibung

Die Erfindung betrifft eine Einrichtung zur Kollisionsverhinderung zweier Schneidwerkzeuge einer rechnergesteuerten Schneidanlage entsprechend dem Oberbegriff des Anspruchs 1, wie z.B. aus der DE-A-3627658 bekannt.

Die DE-OS 33 21 954 offenbart eine Höchstdruck-Wasserstrahlschneidanlage mit einer Schneidvorrichtung, die aus einem Schneidportal und einem auf diesem angeordneten Schneidkopfträger gebildet wird. Die von der im Schneidkopfträger angeordneten Hochdruckdüse aus dem Material auszuschneidenden Konturen werden in Form von Datenpaaren manuell in einen mit der Schneidvorrichtung verbundenen Rechner eingegeben und dann mit geöffneter Hochdruckdüse einzeln abgefahren.

Um die Durchlaufzeiten der Zuschnitte, insbesondere mehrerer aus einer Vorlage auszuschneidender Muster zu verkürzen, sind in der DE-PS 35 44 251 und der DE-OS 36 27 110 unterschiedliche Verfahren angegeben, mit denen ein rasches Auslegen des Schnittbildes möglich wird und dabei gleichzeitig dem Rechner die Konturen der einzelnen Muster und deren Lage automatisch mitgeteilt werden. Beim Zuschnitt werden diese Konturen dann jeweils nacheinander in der Reihenfolge durchfahren, in der sie der Rechner empfangen hat.

Mit diesen Verfahren kann jedoch nur der vom Bedienpersonal beeinflußte Anteil der Durchlaufzeit, nämlich des Schablonenauslegens und der Konturdateneingabe optimiert werden.

Um die Durchlaufzeiten für einen Materialzuschnitt mehrerer Muster aus einer Stoffbahn oder einem größeren plattenförmigen Werkstoff auf rechnergesteuerten Schneidanlagen zu verringern, können mehrere Schneidwerkzeuge gleichzeitig für den Schneidvorgang eingesetzt werden.

Werden zwei Schneidwerkzeuge verwendet, können sie so angeordnet werden, daß sie sich gleichzeitig vom äußeren Rand des Zuschneidetisches der Schneidanlage mit dem Zuschnitt beginnend, aufeinander zu bewegen und beide je die Hälfte der vorgesehenen Schnittlinien in Längs- und Querausdehnung durchfahren.

Um eine Kollision der die Schneidwerkzeuge aufnehmenden Schneidportale in der Mitte des Zuschneidetisches auszuschließen, ist es ebenso denkbar, mit dem Zuschnitt von der Mitte ausgehend zu beginnen und an den Rändern zu beenden.

Um den Ausnutzungsgrad zu optimieren, d.h., das Verhältnis von Fläche des Zuschnitts zur Fläche der Stoffbahn zu erhöhen, wird das eine Schneidwerkzeug von der Mitte nach außen und das andere von außen in den inneren Bereich geführt werden müssen, damit so ein nahtloser Übergang der Schnittlinien erzielbar ist.

Mit allen zuvor genannten Verfahren ist jedoch nur dann die Schneidzeit um exakt den Faktor der Anzahl der verwendeten Schneidwerkzeuge im Vergleich zu einem einzelnen zu verringern, wenn der Zuschnitt symmetrisch zu der Linie ist, auf der der Anfang bzw. Endpunkt der einzelnen Schneidwerkzeuge liegt. Für einen unsymmetrischen Zuschnitt hängt die Zeitreduktion ausschließlich von den Konturen der einzelnen auszuschneidenden Muster ab.

Eine noch weitere Optimierung ergäbe sich dann, wenn nicht jedem Schneidportal ein besonderer Schneidbereich zugeteilt wäre, sondern der Zuschnitt der vom Rechner erfaßten Konturdaten so auf die Schneidportal verteilt würde, daß jedes Portal seinen Zuschnitt zur selben oder annähernd derselben Zeit beendet hätte. Da sich hierbei die Arbeitsbereiche der Portale teilweise überdecken, ist diese Form der Optimierung nur möglich, wenn sichergestellt ist, daß die Portale während des Schneidvorgangs nicht miteinander kollidieren.

Aus der DE-A-36 27 658 ist eine numerische Steuervorrichtung für zwei Werkzeuge bekannt, bei der die Bewegung eines jeden Werkzeuges in Bearbeitungsblöcken berechnet wird. Die Startposition des einen Werkzeugs wird mit der Endposition des anderen Werkzeugs verglichen. Abhängig vom Ergebnis dieses Vergleichs wird die Bewegung des die bestimmte Endposition erreichenden Werkzeugs gesperrt, um eine Kollision der Werkzeuge zu verhindern.

Diese Steuerungsvorrichtung ist nicht in der Lage, Abweichungen der Ist- von der Soll-Lage der Werkzeuge während des Abarbeitens der zuvor berechneten Bearbeitungsblöcke zu erfassen. Sofern ein mechanischer Defekt dazu führt, daß der Antrieb eines Werkzeugs während des Durchlaufs der Bearbeitungsblöcke einen ihm zugewiesenen Steuerbefehl nicht annimmt, kann eine Kollision der Werkzeuge nicht ausgeschlossen werden. Ebenso können fehlerhaft eingegebene Ziel- bzw. Endkoordinaten, die nicht zu dem zugehörigen Steuerungsprogramm gehören, nicht erkannt werden.

Folglich muß schon die Aufteilung der Schneidreihenfolge der einzelnen auszuschneidenden Konturen unter möglichen Kollisionsgesichtspunkten vorgenommen werden. Ausgehend von einem willkürlich gewählten Null- oder Ursprungspunkt $P_o$ wird die Koordinatenschar jeder Schnittkontur in das Rechenwerk eingegeben. Für die nun vorzunehmende Ermittlung der optimalen Wege der Schneidwerkzeuge, wird diesen zu jeder möglichen bzw. notwendigen Bewegung in die kollisionsgefährdete Richtung eine die tolerierte Annäherung beschreibende Sicherheitszone zugewiesen. Diese Sicherheitszone ist ein konstanter Betrag, der zu der jeweiligen Positionskoordinate addiert oder subtrahiert wird.

Ob eine Addition oder eine Subtraktion der Sicherheitszone zu erfolgen hat, ist von der zuvor gewählten Lage des Null- oder Ursprungspunktes Po abhängig.

Im Rechenwerk erfolgt die Aufteilung der später auszuschneidenden Konturen einmal unter der Bedingung, daß beide Schneidwerkzeuge gleichzeitig oder nahezu gleichzeitig den Zuschnitt beenden sollen und zum anderen unter der Bedingung:

$$P_{1i}(x) + P(1a) < P_{2i}(x) - P(2a)$$

wobei

$P_{1i}$, $P_{2i}$ : die jeweils mögliche Position der Schneidwerkzeuge in kollisionsgefährdeter Richtung

P(1a), P(2a) : der Betrag der Sicherheitszone für das jeweilige Schneidwerkzeug sind.

Mit der zuvor beschriebenen Datenaufteilung ist theoretisch sichergestellt, daß eine Kollision der Schneidwerkzeuge während des Zuschnitts ausgeschlossen ist. Zusätzlich müssen aber Vorkehrungen getroffen werden, die sicherstellen, daß eine Kollision auch dann ausgeschlossen ist, wenn die Schneidwerkzeuge die rechnerisch ermittelte und vorgegebene Bahn verlassen. Das kann z.B. dadurch geschehen, daß im Laufe der Zeit die Führungen der Schneidwerkzeuge verschmutzen oder die zum Antrieb der Schneidwerkzeuge notwendigen Kräfte aus anderen Gründen ansteigen. Damit ändert sich zwangsläufig auch die Beschleunigungsfähigkeit, die dem Rechenprogramm als unveränderliche Momentangröße vorliegt, so daß die tatsächlich erreichte Position hinter der theoretisch erreichbaren zurückbleibt.

Der Erfindung liegt die Aufgabe zugrunde, eine Einrichtung zur Kollisionsverhinderung mehrerer Schneidwerkzeuge einer rechnergesteuerten Schneidanlage zu schaffen.

Die Lösung der Aufgabe erfolgt durch die Merkmale des Kennzeichenteils des Anspruches 1. Weitere Ausgestaltungen der Erfindung ergeben sich aus den Unteransprüchen.

Vorteilhaft an der Erfindung stellt sich dar, daß immer die tatsächliche Position jedes Schneidwerkzeugs überwacht und eine durch unterschiedliche dynamische Verhältnisse hervorgerufene Kollisionsgefahr verhindert wird.

Mit Hilfe einer Zeichnung soll die Erfindung beispielhaft an einer mit zwei Schneidportalen ausgerüsteten Höchstdruck-Fluidstrahl-Schneidanlage erläutert werden.

Es zeigt:

Figur 1 eine perspektivische Darstellung der Höchstdruck-Wasserstrahlschneidanlage

Figur 1a die Draufsicht der Schneidanlage in vereinfachter Darstellung

Figur 2 das Blockschaltbild der elektronischen Steuer- und Überwachungseinheit

Figur 3 das Schema einer 32-bit arithmetisch-logischen Funktionseinheit

Figur 4 die Schaltung einer 4-bit arithmetischen Funktionseinheit

Figur 5 den elektrischen Schaltplan der Sicherheitsschaltung.

Figur 6 den elektrischen Schaltplan zur Notausschaltung der Schneiddüsen.

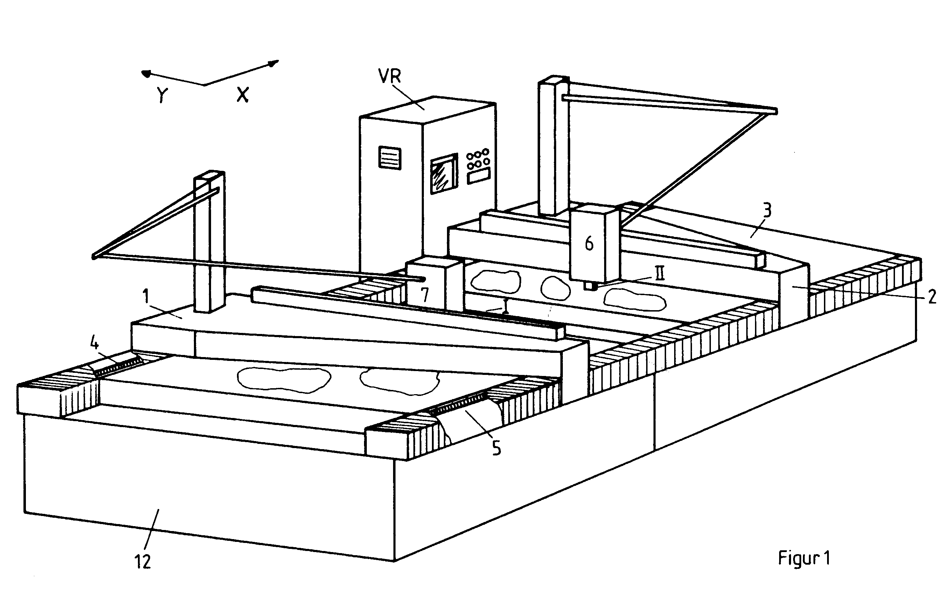

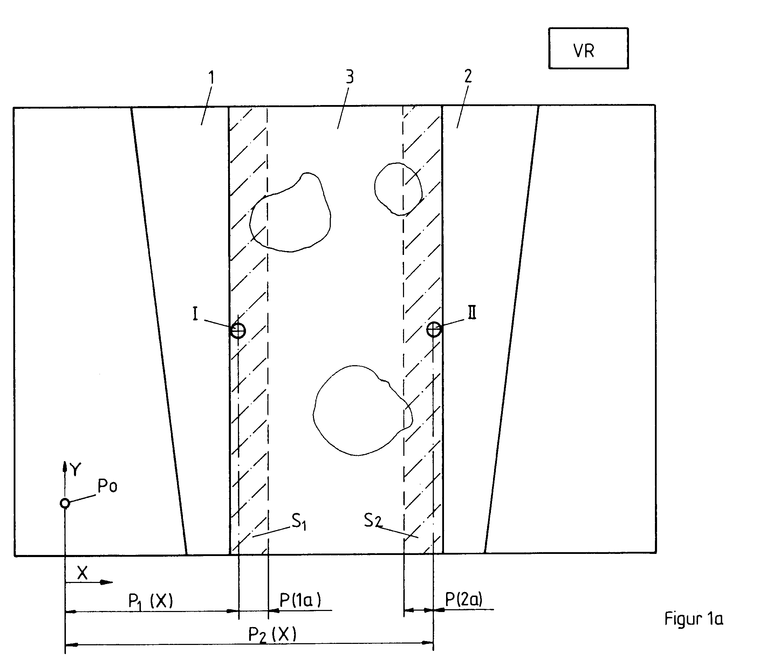

Aus der perspektivischen Ansicht der Höchstdruck-Wasserstrahlschneidanlage in Figur 1 gehen deren wesentlichen Merkmale hervor.

Auf dem Maschinengestell 12 sind über dem Zuschneidtisch 3 nebeneinander zwei Schneidportale 1,2 an Zahnstangen 4,5 längsverschiebbar angeordnet, wobei von jedem Schneidportal 1,2 die vollständige Längsausdehnung des auf dem Zuschneidetisch auszubreitenden Schneidgutes überfahren werden kann.

Jedes Schneidportal 1,2 trägt einen auf diesem querverschiebbar gelagerten Schneidkopfträger 6 bzw. 7, der die Hochdruck-Schneiddüsen I bzw. II aufnimmt. Die Lagerung der Schneidportale 1,2 und der Schneidkopfträger 6,7 kann in der aus der DE-PS 36 37 617 bekannten Form ausgeführt werden. Um eine möglichst hohe mittlere Schnittgeschwindigkeit erreichen zu können, ist es notwendig, die Achsenantriebe so auszulegen, daß sie eine Spitzengeschwindigkeit von bis zu 1 m/s zulassen.

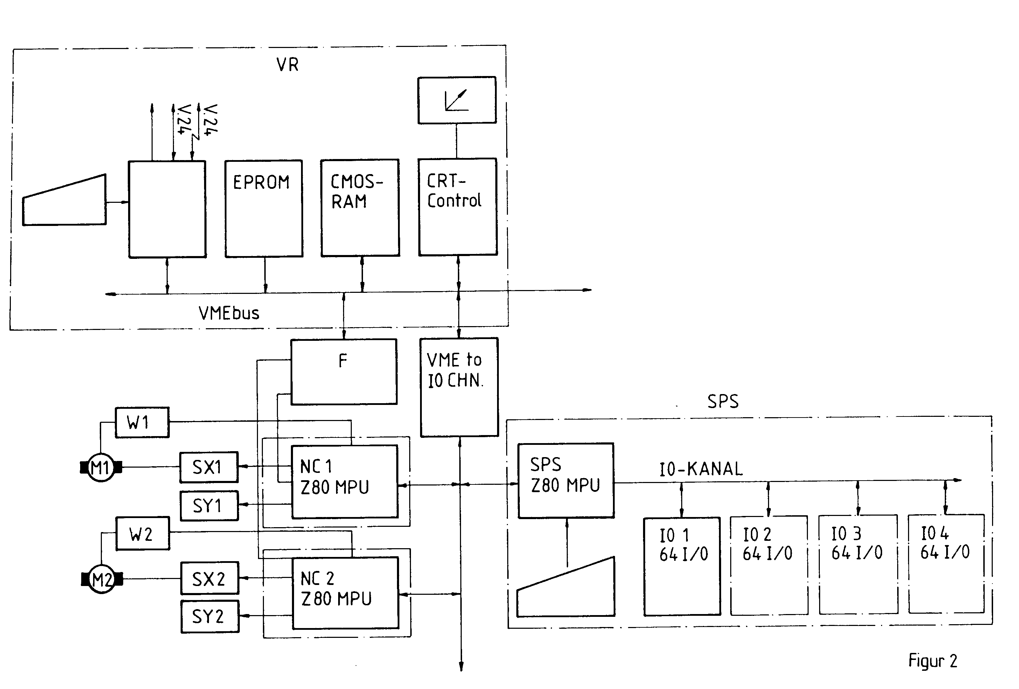

Die Überwachung und Steuerung beider Portale 1,2 und Schneidkopfträger 6,7 erfolgt durch die Lageregler SX1, SX2 und SY1, SY2, die letztendlich in elektrischer Verbindung mit dem Rechenwerk VR stehen, wie aus Figur 2 hervorgeht.

Über inkrementale Wegaufnehmer wird der Istwert des jeweils zurückgelegten Weges jedes Portals 1 bzw. 2 ermittelt. Diese Weggeber sind in bekannter Weise mit dem jeweiligen Motor der Portalen 1,2 verbunden. In Figur 2 sind die Wegaufnehmer mit W1, W2 bezeichnet, wobei Wegaufnehmer W1 dem Schneidportal 1 und Wegaufnehmer W2 dem Schneidportal 2 zugeordnet wird. Diese Indizierung gilt auch für die nur symbolisch dargestellten Motoren M1 bzw. M2, sowie die nachfolgend noch näher zu erläuternden elektronischen Funktionseinheiten NC1 bzw. NC2.

Es ist an sich selbstverständlich, daß die mit den Motoren M1 bzw. M2 verbundenen Wegaufnehmer W1, W2 nicht zwingend inkremental arbeiten müssen, sondern eine absolute Wegaufnahme ebenso denkbar wäre.

Die Lageregler SX1 und SY1 für die Längs- und Querbewegung des Schneidportals 1 sind einerseits mit der elektronischen Funktionseinheit NC1 und andererseits mit dem jeweils für die entsprechende Bewegungsrichtung vorgesehenen Antriebsmotor verbunden, wobei sich das Schneidportal 1 selbstverständlich nur in Längsrichtung (x-Richtung) bewegt und die Querrichtung (y-Richtung) nur vom Schneidtopfträger 6 durchfahren wird. Entsprechendes gilt für die Lageregler SX2 und SY2 für das Schneidportal 2 mit der elektronischen Funktionseinheit NC2.

Aus Gründen der Einfachheit, und weil für die Erfindung nur die Bewegung der Schneidportale 1,2 in kollisionsgefährdeter Richtung (x- Richtung) von Bedeutung ist, sind in Figur 2 nur die Antriebsmotoren M1,M2 der Schneidportale 1,2 mit den zugehörigen Weggebern W1, W2 dargestellt. Selbstverständlich stehen aber auch die für die Querbewegung der Schneidkopfträger 6,7 zuständigen Lageregler SY1, SY2 mit entsprechenden Motoren und Weggebern in Wirkverbindung. Die Funktionseinheiten NC1, NC2 bestehen aus einem autark arbeitenden Rechnerwerk mit einem Z80 Hauptprozessor mit Programm- und Arbeitsspeichern.

Jeder dieser Funktionseinheiten obliegt die Steuerung eines Schneidportals.

Beide Funktionseinheiten NC1, NC2 sind mit den weiteren elektronischen Funktionseinheiten SPS und F verschaltet, wobei letztere als Bindeglied zwischen dem Verwaltungsrechner VR und den mikroprozessorgesteuerten Funktionseinheiten NC1 und NC2 dient. Der Verwaltungsrechner VR besteht aus einem Zentralrechner mit Tastatur und Bildschirm sowie einem Programmspeicher (EPROM) und einem Arbeitsspeicher (CMOS-RAM).

Die speicherprogrammierbare Steuerung SPS weist ebenfalls einen Z80 Mikroprozessor auf und dient zum Bedienen von Stellgliedern. Von ihr kommen beispielsweise die Befehle zum Öffnen oder Schließen der Hochdruckdüsen I und/oder II.

Eine Zeitbetrachtung liefert das Ergebnis, daß bei gleichzeitiger Bahnsteuerung von 2-Achsenpaaren bei einer maximalen Geschwindigkeit von 1 m/s und einer beispielsweise geforderten Genauigkeit von 0,1 mm eine Systemreaktionszeit erforderlich wird, die unter 100 $\mu$s liegt.

Das hier gezeigte Schema einer hierarchischen Systemstruktur ermöglicht solche niedrigen Reaktionszeiten, da jede Funktionsgruppe SPS,NC1,NC2 für sich, unabhängig von den anderen, die ihr zugewiesenen Aufgaben abarbeitet und dann neue Aufgaben bzw. Befehle vom Verwaltungsrechner VR empfängt.

Bekannte bus-Strukturen (VME-BUS) mit einem Multi-Task-Echtzeitbetriebssystem sorgen für eine schnelle Kommunikation mit ihrem Verwaltungsrechner VR.

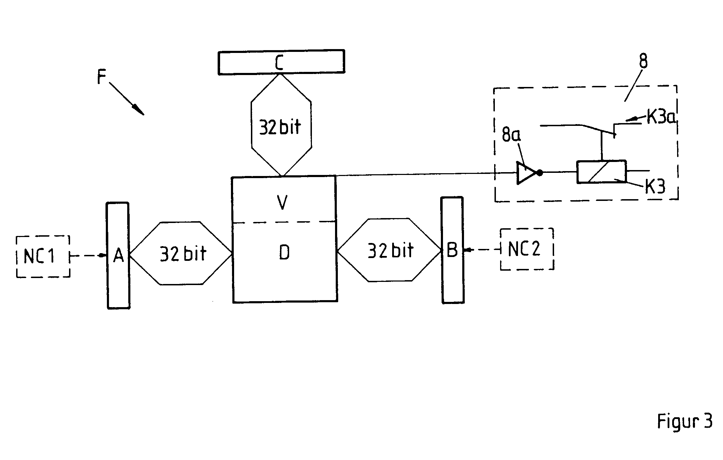

In das Register C der in Figur 3 gezeigten 32 bit arithmetisch-logischen Funktionseinheit F wird in digitalisierter Form der Wert der noch tolerierbaren Annäherung beider Schneidportale 1 und 2, nämlich P(1a) P(2a), eingegeben und gespeichert. Bei der nachfolgenden Funktionsbeschreibung wird davon ausgegangen, daß die Wahl des Nullpunktes $P_o$ und die Bewegungsrichtung bzw. die Sicherheitszone S1 bzw. S2 der Schneidportale 1,2 gemäß Figur 1a gewählt wurde. Hiernach ließe sich die bevorstehende Kollision durch die Gleichung:

$$P_1(X) + P(1a) = P_2(X) - P(2a)$$

mathematisch darstellen, wobei

| | |
|---|---|
| $P_1(X)$ | der jeweils zurückgelegte Weg des Portals 1 (der Schneiddüse I) bezogen auf den Nullpunkt $P_o$, |
| $P_2(X)$ | der jeweils zurückgelegte Weg des Portals 2 (der Schneiddüse II) bezogen auf den Nullpunkt $P_o$, |
| $P(1a); P(2a)$ | die Sicherheitszone des jeweiligen Schneidportals 1 bzw. 2 bezogen auf die Schneiddüse 1 bzw. II |

Durch Umstellen obiger Gleichung erhält man den Wert der gerade noch tolerierbaren Annäherung zu:

$$P_2(X) - P_1(X) > P(1a) + P(2a)$$

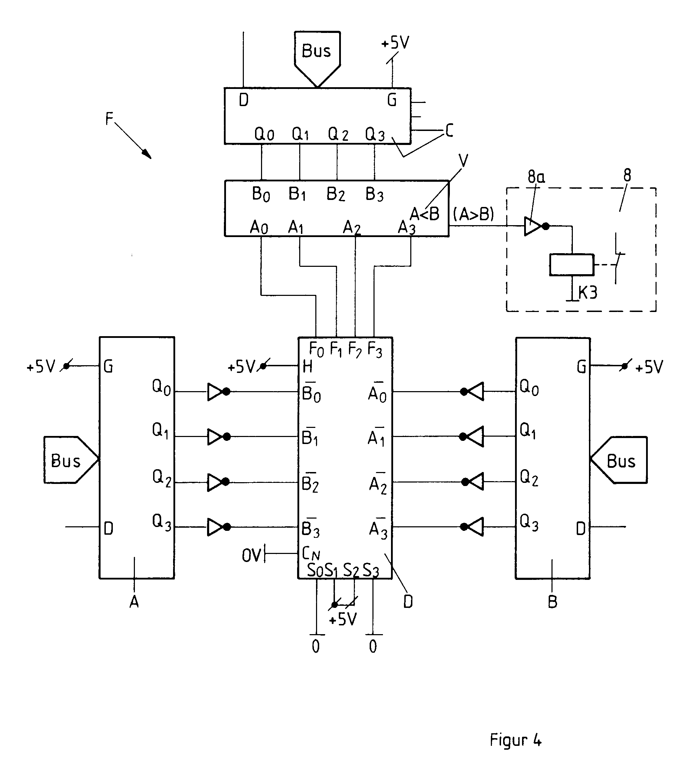

Von der Funktionseinheit NC1 wird die jeweils nächste Zielkoordinate $P_1(x)$ in kollisionsgefährdeter Richtung (x-Richtung) des Schneidportals 1 in das Register A der Funktionseinheit F geschrieben und kurzzeitig gespeichert. Die Funktionseinheit NC2 schreibt die jeweils nächste Zielkoordinate $P_2(x)$ des Schneidportals 2 in das Register B der Funktionseinheit F, wobei dieser Wert ebenfalls kurzzeitig gespeichert wird. In einem Differenzbildner D in der Funktionseinheit F werden die Werte aus den Registern A und B entsprechend obiger Gleichung subtrahiert und die Differenz in einem Vergleicher V mit dem Wert des Registers C verglichen. Wenn die Differenz den Wert des Registers C annimmt oder unterschreitet, setzt der im üblichen Sprachgebrauch "(A < B)-Ausgang" genannte Ausgang des Vergleichers V ein Stellglied 8, welches sofort die Lageregler SX1 und/oder SX2 unterbricht, so daß die Motoren M1, M2 keine weiteren Steuersignale erhalten. Die Gefahr der Kollision ist damit verhindert. Zusätzlich können die Antriebsmotoren M1, M2 der Schneid- portale 1,2 mit einer hier nicht näher dargestellten Bremse festgesetzt werden, wodurch die Systemreaktionszeit erhöht wird. Figur 4 zeigt die Schaltung der zuvor beschriebenen Funktionseinheit F, wobei aus Gründen der Vereinfachung nur eine 4-bit-Schaltung dargestellt ist, die sich aber durch einfache Vervielfachung auf 32 bit erweitern läßt. Die in die Bauteilgruppen eingezeichneten Ziffern bezeichnen die dem Fachmann bekannten Ein- und Ausgänge.

In vorteilhafter Weise können die Register A,B,C aus jeweils "Zwei 4-bit Latches" (beispielsweise 74 100) der Differenzbildner D aus jeweils "4-bit arithmetisch-logische Einheit" (beispielsweise 74 181) und der Vergleicher V aus jeweils einem "4-bit Vergleicher" (beispielsweise 7485) gebildet werden. Das Stellglied 8 besteht in bekannter Weise aus einem Verstärker 8a, einem dazu in Reihe geschalteten Schütz K3 und dem zugehörigen Schalter K3a.

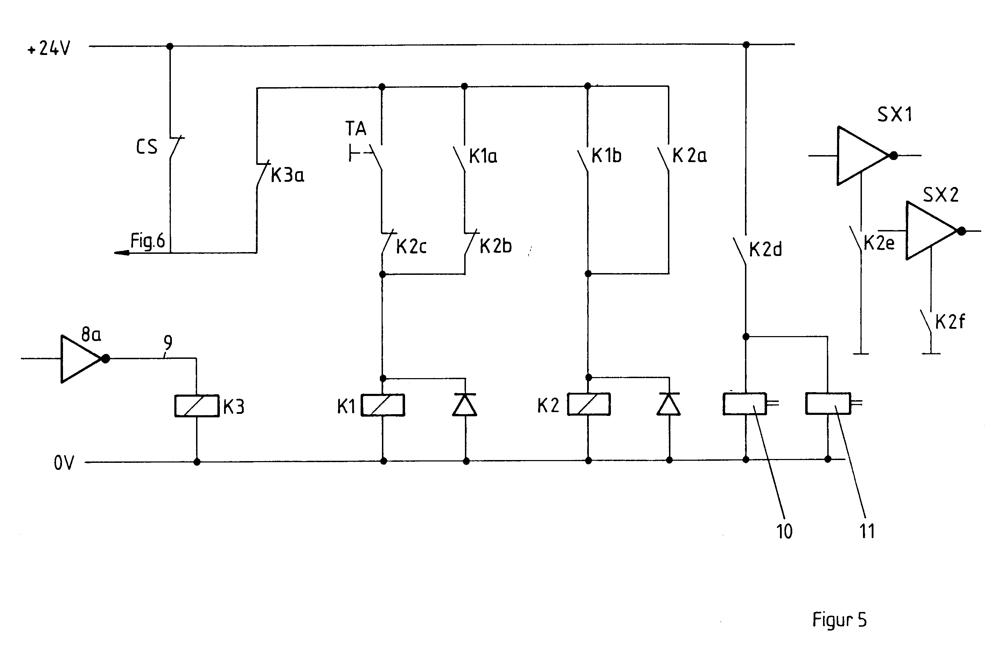

Vorteilhaft ist, wenn zusätzlich dazu Vorkehrungen getroffen werden, daß ein selbsttätiges Wiederanlaufen der Schneidanlage nach einem Stopp ausgeschlossen ist. In Figur 5 ist dazu beispielhaft der Schaltplan einer diese Bedingung erfüllenden elektrischen Schaltung beschrieben. Hierin sind ein Quittierschalter mit TA, ein sogenannter Crash-Schalter mit CS und die Schütze mit K1-K3 bezeichnet.

Die Funktionsweise dieser Schaltung ist folgende: Zum Einschalten der Schneidanlage wird der Schalter TA betätigt, so daß das Schütz K1 anzieht und die zugehörigen Schalter K1a, K1b schließen. Dadurch zieht das Schütz K2 an und die Schalter K2a, K2d, K2e, K2f schließen, während die Schalter K2b, K2c öffnen. Damit wird das Schütz K1 wieder stromlos und die Schalter K1a, K1b öffnen. Die Sicherheitsschaltung ist nun aktiviert und die Lageregler SX1, SX2 sind in Betriebsbereitschaft, der Schneidvorgang kann - entsprechende Steuerbefehle an die Lageregler SX1, SX2 vorausgesetzt - beginnen.

Für den Fall, der Vergleicher V ermittelt eine bevorstehende Kollision der Schneidportale 1,2 , erfolgt vom Vergleicher V der Steuerimpuls, der über den Verstärker 8a und die Leitung 9 an das Schütz K3 weitergegeben wird, das daraufhin anzieht und den zugehörigen Schalter K3a öffnet. Die Verbindung zu den Lagereglern SX1 und/oder SX2 wird unterbrochen, wodurch deren Leistungsausgang stromlos wird und die Motoren M1, M2 der Schneidportale 1,2 stehenbleiben. Außerdem werden die Schalter K2a, K2d, K2e, K2f geöffnet und die Schalter K2b, K2c geschlossen, weil das Schütz K2 stromlos geschaltet wurde. Zusätzlich kann vorgesehen werden, daß die Motoren M1, M2 mittels der schematisch dargestellten Bremsen 10, 11 abgebremst werden. Wenn der Quittierschalter TA als Taster ausgebildet ist, ist sichergestellt, daß dieser grundsätzlich betätigt werden muß, um einen erneuten Schneidvorgang nach einer automatischen Abschaltung zu beginnen. Damit ist beispielsweise auch gewährleistet, daß, wenn im Vergleicher V eine drohende Kollision festgestellt wurde, in jedem Fall die Bedienperson entscheiden muß, ob ein weiterer Schneidvorgang möglich ist oder nicht. Gleichzeitig ist ausgeschlossen, daß die Anlage beispielsweise deshalb wieder anläuft, weil die in die Register A und B später eingeschriebenen Positionsdaten keine Kollisionsgefahr mehr erkennen lassen und wegen des fehlenden Steuerimpulses über die Leitung 9 der zum Schütz K3 gehörige Schalter K3a geschlossen wurde. Das gleiche gilt, wenn ein kurzzeitiger Spannungsabfall zur Stillsetzung der Schneidanlage führt. Der sogenannte Crash-Schalter CS ist eine mechanische Sicherung gegen eine Kollision. Dieser Schalter CS ist auf einem der Portale 1 oder 2 angeordnet und an der entsprechenden Stelle des anderen Portals ist ein nicht näher dargestellter Fühler oder eine Stange angebracht, deren Länge der tolerierten Annäherung der Portale 1 und 2 entspricht. Wird dieser Abstand unterschritten und vom Vergleicher V kein Steuerimpuls an das Stellglied K3 abgegeben, betätigt der Fühler den Schalter CS, so daß der Stromkreis zu den Lagereglern SX1 und SX2 unterbrochen ist.

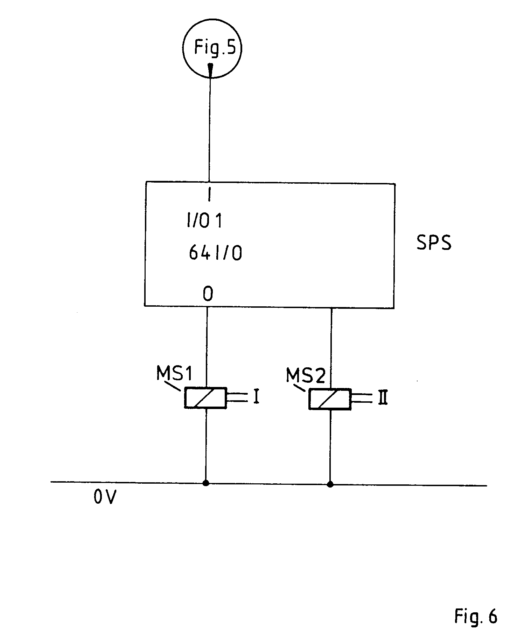

Im übrigen sollten im Falle der Kollision beider Portale 1,2 die Schneiddüsen I,II ausgeschaltet und in eine sichere Position gefahren werden, um zusätzliche Schäden zu vermeiden. Aus diesem Grund ist der Crash-Schalter CS mit der Speicherprogrammierbaren Steuerung SPS elektrisch verbunden. Aus Figuren 5 bzw. 6 wird deutlich, daß die Speicherprogrammierbare Steuerung SPS im Falle der Kollision einen elektrischen Impuls bekommt so daß ein Rechenprogramm ablaufen kann, mit dem Ergebnis, daß die Magnetschalter MS1, MS2 der Schneiddüse I,II angesteuert werden und zum einen die Düsen I und II ausschalten und in vorteilhafter Weise in eine höhere Position gefahren werden. Da es sich hier um eine rein konstruktive Maßnahme handelt, die einerseits dem Fachmann völlig geläufig ist und andererseits nicht unmittelbar mit der erfindungsgemäßen Einrichtung zur Kollisionsverminderung zusammenhängt, da sie erst nach einer erfolgten Kollision in Aktion tritt, wurde auf eine ausführliche Erläuterung verzichtet.

## Patentansprüche

1. Einrichtung zur Kollisionsverhinderung zweier Schneidwerkzeuge (I, II) einer von einem Rechner (VR) gesteuerten Schneidanlage, wobei mit dem Rechner (VR) eine mindestens dreiregistrige arithmetisch-logische Funktionseinheit (F) und zwei logische Funktionseinheiten (NC1, NC2) verbunden sind, und über eine logische Funktionseinheit (NC1) eine Zielkoordinate des einen Schneidwerkzeuges (I) in ein Register (A) der arithmetisch-logischen Funktionseinheit (F) einschreibbar ist, **dadurch gekennzeichnet**, daß

- jedes Schneidwerkzeug (I, II) auf einem Schneidportal (1, 2) angeordnet ist und mit einem Wegaufnehmer (W1, W2) in Verbindung steht,
- für jedes Schneidportal (1, 2) ein Lageregler (SX1, SX2) vorgesehen ist,
- beide Funktionseinheiten (NC1, NC2) mit den Wegaufnehmern (W1, W2) in Wirkverbindung stehen,
- von den Funktionseinheiten (NC1, NC2) die jeweils nächste Zielkoordinate beider Schneidportale (1, 2) in je ein Register (A, B) der Funktionseinheit (F) einschreibbar ist,
- ein Differenzbildner (D) vorgesehen ist, mittels dessen die Differenz der Register (A) und (B) mit einem in einem Register (C) der Funktionseinheit (F) befindlichen Wert vergleichbar ist,
- ein Steuerimpuls eines Vergleichers (V) die Lageregler (SX1, SX2) unterbricht, wenn der Betrag der Differenz der Register (A) und (B) den Wert des Registers (C) annimmt oder unterschreitet.

2. Einrichtung nach Anspruch 1, dadurch gekennzeichnet, daß die Funktionseinheiten (NC1, NC2) aus einem autark arbeitenden Rechenwerk mit Programm und Arbeitsspeichern bestehen.

3. Einrichtung nach Anspruch 1, dadurch gekennzeichnet, daß zwischen dem Vergleicher (V) und den Lagereglern (SX1, SX2) elektrische Schaltglieder (K1-K3, TA) so angeordnet sind, daß ein selbsttätiges Anlaufen der Schneidanlage nach einer kollisionsüberwachten Abschaltung ausgeschlossen ist.

4. Einrichtung nach Anspruch 3, dadurch gekennzeichnet, mittels des vom Vergleicher (V) ausgehenden Steuerimpulses das mit dessen Ausgang verbundenen elektrischen Schütz (K3) aktivierbar und die elektrische Verbindung zwischen der Steuerung und den Lagereglern (SX1,SX2) unterbrechbar ist.

## Claims

1. A device to prevent the collision of two cutting tools (I, II) of a cutting system controlled by a computer (VR), whereby at least one triple-register arithmetic logic functional unit (F) and two logic functional units (NC1, NC2) are connected to the said computer (VR), and a desired coordinate of one cutting tool (I) may be written to one register (A) of the arithmetic logic functional unit (F) via a logic functional unit (NC1), characterised in that

- each cutting tool (I, II) is arranged on a cutter carrier (1, 2) and is connected to a position sensor (W1, W2),
- a position controller (SX1, SX2) is provided for each cutter carrier (1, 2),
- both functional units (NC1, NC2) are effectively connected to the position sensors (W1, W2),
- the successive respective desired coordinates of both cutter carriers (1, 2) can in each case be written to a register (A, B) of the functional unit (F) by the functional units (NC1, NC2),
- a differentiating unit (D) is provided, by means of which the difference in values between the registers (A) and (B) can be compared to a value stored in a register (C) of the functional unit (F),
- a control pulse of a comparator (V) interrupts the position controllers (SX1, SX2) if the value of the difference between the registers (A) and (B) assumes the value of the register (C) or falls below it.

2. A device according to claim 1, characterised in that the functional units (NC1, NC2) comprise an autonomously functioning arithmetic logic unit with program memory and working storage.

3. A device according to claim 1, characterised in that electrical contact elements (K1-K3, TA) are arranged between the comparator (V) and the position controllers (SX1, SX2) to rule out the possibility of any automatic start-up of the cutting device following a collision-monitored switch-off.

4. A device according to claim 3, characterised in that the electrical contactor (K3) which is connected to the output of the comparator (V) can be activated by the control pulses originating therefrom, and that the electrical connection between the controller and position controllers (SX1, SX2) can be interrupted.

## Revendications

1. Dispositif anticollision pour deux outils de coupe (I, II) d'une installation de coupe commandée par un ordinateur (VR), dans lequel une unité arithmétique logique de fonctionnement (F), comportant au moins trois registres, et deux unités logiques de fonctionnement (NC1, NC2) sont reliées à l'ordinateur (VR), et dans lequel une coordonnée de cible de l'un (1) des outils de coupe peut être enregistrée, par l'intermédiaire d'une unité logique de fonctionnement (NC1), dans un registre (A) de l'unité arithmétique logique (F), caractérisé

- en ce que chaque outil de coupe (I, II) est disposé sur un portique de coupe (1, 2) et est relié à un détecteur de course (W1, W2),
- en ce qu'un régulateur de positionnement (SX1, SX2) est prévu pour chaque portique de coupe (1, 2),
- en ce que les deux unité logiques de fonctionnement (NC1, NC2) sont en liaison fonctionnelle avec les détecteurs de course (W1, W2),
- en ce que, chacune des cordonnées de cible, suivantes des deux portiques de coupe (1, 2) peuvent être enregistrées chaque foie dans un registre (A, B) de l'unité de fonctionnement (F), par les unités logiques de fonctionnement (NC1, NC2),
- en ce qu'il est prévu un soustracteur (D), au moyen duquel la différence der registres (A) et (B) peut être comparée avec une valeur se trouvant dans un registre (C) de l'unité de fonctionnement (F),
- en ce qu'une impulsion de commande émise par un comparateur (V) arrête les régulateurs de positionnement (SX1, SX2) si la valeur de la différence des registres (A) et (B) atteint ou devient inférieure à la valeur du registre (C).

2. Dispositif suivant la revendication 1, caractérisé en ce que les unités de fonctionnement (NC1, NC2) sont constituées par un ordinateur travaillant en autarcie, comportant un programme et des mémoires de travail.

3. Dispositif suivant la revendication 1, caractérisé en ce qu'entre le comparateur (V) et les contrôleurs de positionnement (SX1, SX2), sont disposés des organes de coupure électriques (K1-K3, TA), de telle façon qu'une mise en route spontanée de l'installation de coupe soit exclue après un déclenchement provoqué par la surveillance anticollision.

4. Dispositif suivant la revendication 3, caractérisé en ce qu'au moyen de l'impulsion de commande émise par le comparateur (V), le contacteur électrique (K3), raccordé à sa sortie, peut être activé et interrompre la liaison électrique entre l'installation de commande et les contrôleurs de positionnement (SX1, SX2).

Figur 1

Figur 1a

VR

V.24
V.24
V.24

EPROM

CMOS-RAM

CRT-Control

VMEbus

F

VME to IO CHN.

W1

M1    SX1    NC 1 Z80 MPU
      SY1

W2

M2    SX2    NC 2 Z80 MPU
      SY2

SPS

SPS Z80 MPU

IO-KANAL

IO 1 64 I/O

IO 2 64 I/O

IO 3 64 I/O

IO 4 64 I/O

Figur 2

EP 0 334 044 B1

Figur 3

Figur 4

Figur 5

+24V

CS

K3a

Fig.6

TA

K1a

K1b

K2a

SX1

SX2

K2c

K2b

K2d

K2e

K2f

8a

9

K3

K1

K2

10

11

0V

EP 0 334 044 B1

Fig. 6